# FASCICULE DE BREVET EUROPEEN

(11) **EP 1 384 401 B1**
(45) Date de publication et mention de la délivrance du brevet: **21.09.2005**
(21) Numéro de dépôt: 03358011.9
(22) Date de dépôt: 22.07.2003
(51) Int. Cl.: A01K 75/00, D04G 1/02

(54) **Procédé et filet du type tramail permettant de faciliter l'installation du filet du type tramail sur la barre de montage d'une machine à coudre**
Verfahren und Schleppnetz zur Erleichterung der Befestigung des Schleppnetzes an der Montageschiene einer Nähmaschine
Method and trawl-type net facilitating the installation of the trawl-type net on the mounting bar of a sewing machine

(30) Priorité: 23.07.2002 FR 0209306
(43) Date de publication de la demande: 28.01.2004
(73) Titulaire: Saucerotte, Lionel, 13015 Marseille (FR); Saucerotte, Gwladys, 13015 Marseille (FR)
(72) Inventeur: Saucerotte, Lionel, 13015 Marseille (FR); Saucerotte, Gwladys, 13015 Marseille (FR)
(74) Mandataire: Marek, Pierre

(56) Documents cités:
- WO-A-02/26032
- FR-A- 2 682 261
- FR-A- 2 733 390

## Description

L'invention concerne un procédé et un filet du type tramail permettant de faciliter l'installation d'un filet du type tramail ou trémail sur la barre de montage d'une machine à coudre les filets.

Les filets du genre tramail ou trémail comprennent trois nappes de filets, soit un filet intérieur placé entre deux filets extérieurs dont les mailles sont sensiblement plus larges que celles du filet intérieur, les grandes mailles des deux filets extérieurs étant disposées sensiblement en regard les unes des autres, de part et d'autre du filet intérieur.

Les mailles situées à la lisière de deux bordures parallèles de ces trois nappes de filets sont montées sur un cordon dit "de montage" lequel est ensuite assemblé, par couture, à l'aide de la machine à coudre proprement dite, aux cordages de tête (ou corde de liège) et de traîne (ou corde plombée) définissant, respectivement, les bordures haute et basse du tramail.

Lorsque les trois nappes destinées à constituer un tramail sont séparées, il est quasiment impossible de les installer correctement sur la barre de montage des installations de couture permettant l'enfilage des mailles de bordure des trois nappes de filets sur le cordon de montage. Différents dispositifs ont été proposés, à ce jour, pour apporter des solutions à ce problème.

Dans le document FR-2.733.390, est décrit un filet de pêche du type tramail dont les grandes mailles des bordures haute et basse des nappes externes sont munies d'une petite maille triangulaire, disposée à l'intérieur desdites grandes mailles, pour permettre leur assemblage sans les attacher aux petites mailles de bordure du filet intérieur. Il ne semble pas que la prévision de cette petite maille triangulaire puisse être d'une quelconque utilité pour l'installation du tramail sur la barre de montage d'une installation à coudre les filets, ni même pour l'insertion manuelle du cordon de montage dans les mailles de bordure des trois nappes du filet.

Dans le document FR-2.682.261, est décrit un procédé consistant à relier les mailles communes de bordure haute et basse des nappes de filets constituant le tramail, soit au moyen d'un ruban adhésif, soit au moyen d'un fil textile. Les liaisons des mailles des nappes de filets au moyen d'un adhésif peuvent se défaire par suite d'un vieillissement prématuré ou par suite d'un séjour plus ou moins long dans l'eau de mer. La liaison des mailles de bordure des nappes de filets au moyen d'un fil textile enroulé et noué autour du sommet desdites mailles est une proposition toute théorique dont la mise en oeuvre nécessiterait un travail long et minutieux influant défavorablement sur le prix de revient des filets du genre tramail.

Le document FR-2.729.821 décrit un procédé de préfabrication d'un filet du genre tramail suivant lequel l'assemblage des filets intérieur et extérieurs est réalisé en formant, avec le cordon de montage, des boucles permettant ensuite l'assemblage des trois filets composant le tramail sur le cordage de tête ou sur le cordage de traîne, tout en conservant la totale indépendance du filet intérieur par rapport aux filets extérieurs. Ce document n'aborde pas le problème de l'enfilage des mailles de bordure des trois nappes de filets sur le cordon de montage.

Dans le document FR-2.748.189, est décrit un procédé de montage d'un filet de pêche et notamment d'un filet du type tramail, selon lequel, préalablement au montage du filet sur ses ralingues (cordage de tête et cordage de traîne), on réalise, à l'aide de liens, le regroupement des mailles des bords supérieur et inférieur des nappes de filets sous la forme de paquets adjacents comportant chacun un nombre déterminé de mailles. La mise en oeuvre de ce procédé est longue : il faut non seulement regrouper des mailles de grandeurs différentes, par paquets conformés de manière identique, mais il faut ensuite défaire ces paquets de mailles après les avoir enfilés sur le cordon de montage. Il n'est pas évident qu'elle apporte un progrès pour la mise en place des cordons de montage.

Le document WO-02/26032 décrit un procédé pour la préfabrication d'un filet de pêche du genre tramail comprenant un filet intérieur muni d'un cordage de bordure (cordon de montage) et disposé entre deux filets extérieurs lesquels sont également enfilés sur ledit cordage de montage. Les difficultés et la technique d'enfilage des mailles de bordure des trois nappes de filets sur le cordage de montage, ne sont pas évoquées dans ce document.

L'invention propose un procédé et un filet du type tramail permettant de faciliter l'enfilage des lisières haute et basse des filets de type tramail ou trémail sur la barre de guidage d'une installation à coudre les filets permettant l'insertion des cordons de montage dans lesdites lisières.

Selon le procédé et le filet du type tramail de l'invention comme définis dans les revendications 1 et 2, cet objectif est atteint en ajoutant au moins une rangée supplémentaire de mailles, en bordures haute et basse du tramail, ces mailles supplémentaires que l'on appellera "mailles de prise" dans la suite de la description, étant liées, au moyen de noeuds, d'une part, aux mailles de bordure communes des bords haut et bas des trois nappes de filets et, d'autre part, aux mailles de bordure du filet intérieur disposées entre lesdites mailles de bordure communes.

Grâce aux dispositions ci-dessus, les bordures haute et basse du tramail comportent une rangée de mailles supplémentaire de lisière, commune aux trois nappes de filets, cette rangée de mailles de bordure ou mailles de prise facilitant grandement l'enfilage des lisières haute et basse du tramail sur la barre de montage de la machine à coudre, cet enfilage pouvant être effectué aisément et rapidement.

Les buts, caractéristiques et avantages ci-dessus, et d'autres encore, ressortiront mieux de la description qui suit et des dessins annexés dans lesquels :

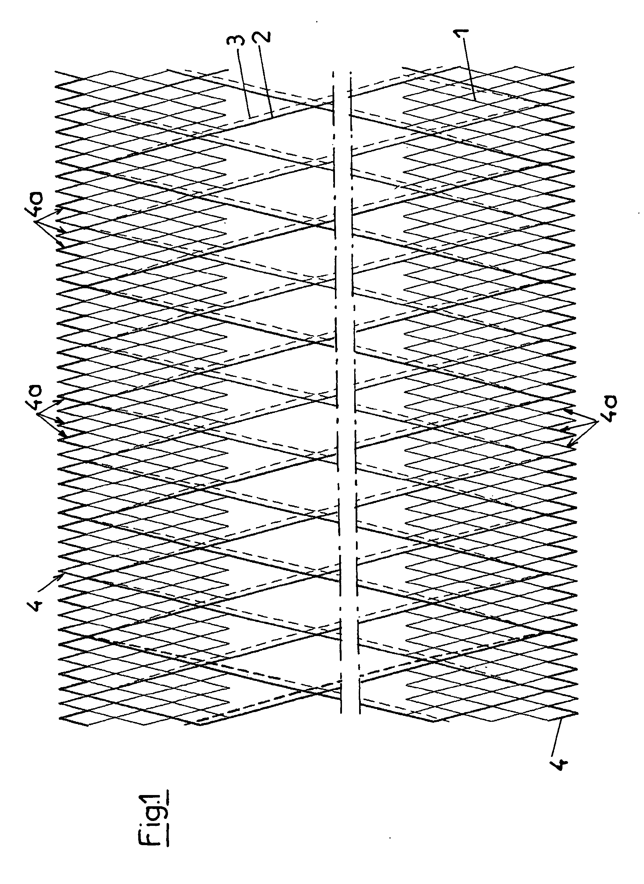

La figure 1 est une vue de face d'une portion de filet de pêche du type tramail comportant application du dispositif selon l'invention.
La figure 2 est une vue de face et de détail de l'un des bords du trémail muni du dispositif de l'invention.
La figure 3 est un vue de face analogue à la figure 2 et montrant le filet en cours de mise en place sur la barre de montage d'une machine à coudre les filets.

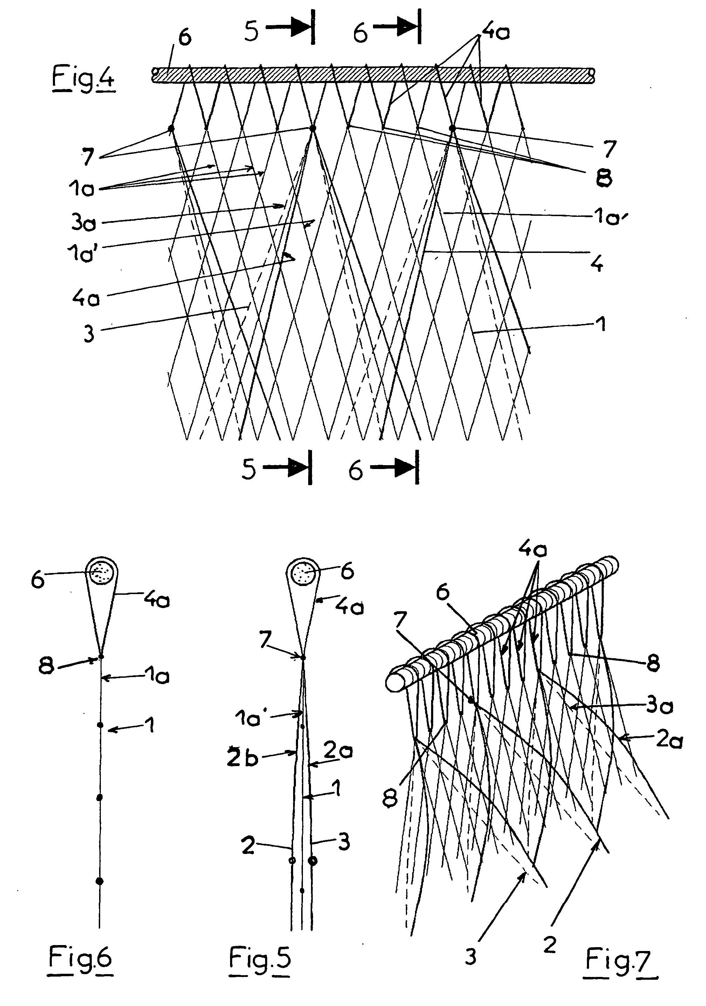

La figure 4 est une vue de face analogue aux figures 2 et 3 et montrant la rangée de mailles de prise enfilée sur le cordon de montage.
La figure 5 est une vue en coupe selon la ligne 5-5 de la figure 4.
La figure 6 est une vue en coupe suivant la ligne 6-6 de la figure 4.
La figure 7 est une vue en perspective montrant une portion de bordure du filet tramail selon l'invention, représentée sur la barre de montage d'une machine à coudre.

On se réfère auxdits dessins pour décrire un exemple intéressant, quoique nullement limitatif, de mise en oeuvre du procédé et de réalisation du dispositif selon l'invention.

L'invention est applicable aux filets de pêche du genre tramail ou trémail constitués de trois nappes de filets, soit un filet intérieur 1 à petites mailles placé entre deux filets extérieurs identiques 2 et 3 dont les mailles sont sensiblement plus grandes que celles du filet intérieur 1.

Les grandes mailles des deux filets extérieurs 2 et 3 sont disposées sensiblement en regard les unes des autres.

Selon le procédé de l'invention, on ajoute au moins une rangée supplémentaire de mailles 4a, dites mailles de prise, en bordure haute et basse du tramail, ces mailles de prise 4a étant liées, au moyen de noeuds, d'une part, aux mailles de bordure communes 1a', 2a, 3a des bords haut et bas des trois nappes de filets 1, 2, 3 et, d'autre part, aux mailles de bordure 1a du filet intérieur 1 disposées entre lesdites mailles de bordure communes 1a', 2a, 3a.

De la sorte, les bordures haute et basse du tramail, sont constituées par une rangée de mailles de prise contiguës, située au même niveau et réparties sur toute la longueur desdites bordures.

Le fil 4 utilisé pour constituer les mailles de prise 4a peut être un fil à ramender d'un type couramment utilisé pour le raccommodage des filets.

Après exécution des rangées haute et basse de mailles de prise 4a, celles-ci peuvent être enfilées provisoirement sur un fil de retenue (non représenté) en attendant l'exécution des opérations de couture des lisières haute et basse du tramail sur le cordage de tête et sur le cordage de traîne, respectivement, les extrémités de ce fil étant ensuite assemblées par un noeud, de sorte à constituer une boucle.

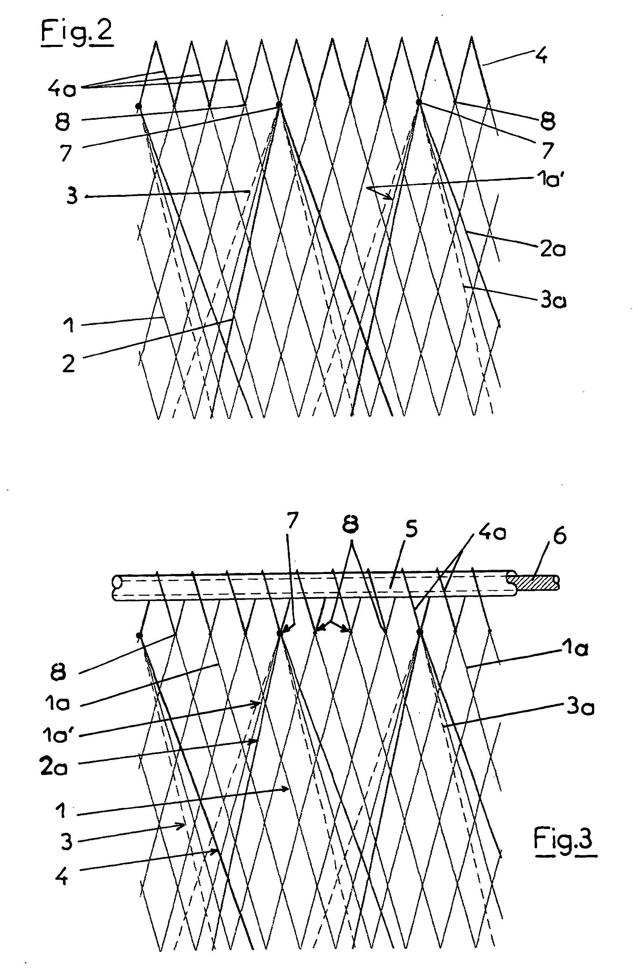

Pour l'installation du tramail sur la barre de montage 5 de la machine à coudre les filets, il suffit de couper le fil de retenue, de relier, par un simple noeud, l'une des extrémités de ce fil, à l'extrémité du cordon de montage 6 en attente à la sortie de ladite barre de montage et de faire glisser la rangée de mailles de prise 4a sur la barre de montage (figure 3), cette mise en place pouvant s'effectuer rapidement et très facilement

Lorsque la totalité de la rangée de mailles de prise 4a a été installée sur la barre tubulaire de montage, la dernière maille enfilée de cette rangée et le cordon de montage 6 traversant ladite maille sont entraînés vers la machine à coudre qui réalise la fixation dudit cordon de montage, sur le cordage de tête (ou corde de liège), ou sur le cordage de traîne (ou corde plombée), selon le cas.

Le filet du type tramail selon l'invention est remarquable en ce qu'il comporte, en bordures haute et basse, une rangée de mailles de prise contiguës 4a commune aux trois nappes de filets 1, 2 et 3 et constituée par un fil 4 lié, de préférence au moyen d'un noeud 7 ou 8, à chacune des mailles de bordure 1a, 1a', 2a, 3a, des trois nappes de filets.

Le fil 4 est lié, d'une part, au moyen d'un noeud 7 commun aux mailles de bordure 1a', 2a, 3a communes aux trois nappes de filets 1, 2, 3 et, d'autre part, au moyen d'un noeud 8 aux mailles de bordure 1a de la nappe de filet intérieure 1 disposées entre deux noeuds communs 7.

## Revendications

1. Procédé pour faciliter l'installation d'un filet du type tramail sur la barre de montage d'une machine à coudre, **caractérisé en ce que** l'on ajoute une rangée supplémentaire de mailles contiguës (4a) dites mailles de prise, en bordures haute et basse du tramail, ces mailles de prise étant liées, au moyen de noeuds (7, 8), d'une part, aux mailles de bordure communes (1a', 2a, 3a) des bords haut et bas des trois nappes de filets (1, 2, 3), et, d'autre part, aux mailles de bordure (1a) du filet intérieur (1) disposées entre lesdites mailles de bordure communes (1a', 2a, 3a).

2. Filet du type tramail à installation facile sur la barre de montage d'une machine à coudre, **caractérisé en ce que** les lisières haute et basse du tramail sont constituées par au moins une rangée de mailles contiguës (4a) dites mailles de prise, liées, au moyen de noeuds (7, 8), d'une part, aux mailles de bordure communes (1a', 2a, 3a) des bords haut et bas des trois nappes de filets (1, 2, 3), et, d'autre part, aux mailles de bordure (1a) du filet intérieur (1) disposées entre lesdites mailles de bordure communes (1a', 2a, 3a).

## Patentansprüche

1. Verfahren zum Erleichtern der Anbringung eines Netzes des Typs Trammelnetz auf der Befestigungsschiene einer Nähmaschine, **dadurch gekennzeichnet, dass** eine weitere Reihe von aneinander angrenzenden Maschen (4a), die als Haltemaschen bezeichnet werden, als obere und untere Umrandungen des Trammelnetzes angefügt werden, wobei diese Haltemaschen mittels Knoten (7, 8) einerseits mit den gemeinsamen Umrandungsmaschen (1a', 2a, 3a) der oberen und unteren Kanten der drei Netzbahnen (1, 2, 3) und andererseits mit den Umrandungsmaschen (1a) des inneren Fangnetzes (1) verbunden sind, die zwischen den gemeinsamen Umrandungsmaschen (1a', 2a, 3a) angeordnet sind.

2. Netz des Typs Trammelnetz zur leichten Anbringung auf der Befestigungsschiene einer Nähmaschine, **dadurch gekennzeichnet, dass** die oberen und unteren Kanten des Trammelnetzes aus wenigstens einer Reihe von aneinander angrenzenden Maschen (4a), die als Haltemaschen bezeichnet werden, gebildet sind, die mittels Knoten (7, 8) einerseits mit den gemeinsamen Umrandungsmaschen (1a', 2a, 3a) der oberen und unteren Kanten der drei Netzbahnen (1, 2, 3) und andererseits mit den Umrandungsmaschen (1a) des inneren Fangnetzes (1) verbunden sind, die zwischen den gemeinsamen Umrandungsmaschen (1a', 2a, 3a) angeordnet sind.

## Claims

1. A process for facilitating the installation of a net of the trammel type on the mounting bar of a sewing machine **characterised by** adding a supplementary row of contiguous stitches (4a), referred to as engagement stitches, at the upper and lower edges of the trammel, said engagement stitches being joined by means of knots (7, 8) on the one hand to the common edge stitches (1a', 2a, 3a) of the upper and lower edges of the three net layers (1, 2, 3) and on the other hand to the edge stitches (1a) of the inner net (1) which are disposed between said common edge stitches (1a', 2a, 3a).

2. A net of the trammel type which is easy to install on the mounting bar of a sewing machine, **characterised in that** the upper and lower edge portions of the trammel are formed by at least one row of contiguous stitches (4a), referred to as engagement stitches, joined by means of knots (7, 8) on the one hand to the common edge stitches (1a', 2a, 3a) of the upper and lower edges of the three net layers (1, 2, 3) and on the other hand to the edge stitches (1a) of the inner net (1) which are disposed between said common edge stitches (1a', 2a, 3a).
